# FASCICULE DE BREVET EUROPEEN

(11) **EP 0 362 352 B1**
(45) Date de publication et mention de la délivrance du brevet: **17.02.1993**
(21) Numéro de dépôt: 89904078.6
(22) Date de dépôt: 21.03.1989
(51) Int. Cl.: G06F 3/03, H04N 1/10, G06K 11/08

(54) **LECTEUR DE DOCUMENTS**
BELEGLESER
DOCUMENT SCANNER

(30) Priorité: 11.04.1988 FR 8804768
(43) Date de publication de la demande: 11.04.1990
(73) Titulaire: THOMSON-CSF, 75008 Paris (FR)
(72) Inventeur: ARQUES, Marc, F-38100 Grenoble (FR)
(74) Mandataire: Guérin, Michel
(86) Numéro de dépôt international: FR8900128
(87) Numéro de publication internationale: WO8909959

(56) Documents cités:
- GB-A- 2 067 812
- US-A- 4 644 406
- Technical Digest (AT&T Technologies), No. 77, October 1985, AT&T (Berkeley Heights, New Jersey, US), J.S. Courtney-Pratt: "Plate device for scanning and displaying graphics".

## Description

L'invention concerne un dispositif photosensible du type permettant la lecture d'un document, c'est-à-dire permettant de former une image d'un objet ou du document et de convertir cette image en signaux électriques, en vue par exemple de la reproduire ou de la transmettre.

Il est connu, notamment dans le domaine de la radiologie, de convertir une image en signaux électriques à l'aide d'un détecteur photosensible, de type surfacique telle qu'une matrice d'éléments photosensibles. La matrice photosensible comporte un réseau de conducteurs en ligne et un réseau de conducteurs en colonne. A chaque croisement d'un conducteur ligne et d'un conducteur colonne, est disposé un montage photosensible appelé point photosensible dans la suite de la description. Les points photosensibles sont ainsi organisés également en ligne et en colonne ; chaque point photosensible étant connecté entre un conducteur ligne et un conducteur colonne.

Le nombre de points photosensibles dans une surface donnée, détermine la résolution de l'image. Il est possible de réaliser des matrices d'éléments photosensibles de grande capacité, par exemple 2000 x 2000 points photosensibles, pour obtenir une image dont les dimensions sont de l'ordre de 40 cm x 40 cm. Chaque point photosensible comporte un élément photosensible tels que photodiode, phototransistor, photoconducteur, sensibles aux photons lumineux visibles ou proches du visible.

Ces photons lumineux sont convertis en charge électrique, et cette charge électrique est accumulée dans une capacité électrique, formant une capacité de stockage qui par exemple peut être constituée par la capacité de l'élément photosensible lui-même. Un dispositif de lecture permet d'interroger l'état électrique de la capacité de stockage, et de convoyer la charge électrique qui constitue le signal vers un amplificateur de signal.

Un exemple de matrice photosensible réalisée par la technique des dépôts en couche mince est donné dans un brevet français n° 86 00716 publié sous le n° 2 593 343 . Ce brevet français décrit d'une part, le fonctionnement détaillé d'une matrice photosensible dont chaque point photosensible est constitué par une photodiode en série avec une capacité ; il décrit d'autre part un procédé de fabrication d'une telle matrice, et la manière de faire alterner sur un substrat, des couches électriquement conductrices transparentes ou non avec des couches semiconductrices et des couches isolantes, en vue d'obtenir la structure désirée du point photosensible.

Un des buts de la présente invention est de permettre l'utilisation de telles matrices photosensibles dans le domaine de la bureautique particulièrement pour la lecture de document, en vue notamment de leur reproduction ou transmission.

Cependant, il est à noter qu'un nombre relativement important de structures différentes de points photosensibles est connu, mais quel que soit le type de points photosensibles utilisé, une matrice photosensible de grande dimension constitue un élément relativement complexe et par conséquent onéreux, de sorte qu'il est particulièrement intéressant de rentabiliser une telle matrice photosensible au niveau de son utilisation.

Dans cette optique, l'invention montre comment utiliser une matrice photosensible, dans un dispositif pouvant remplir au moins deux fonctions qui jusqu'à présent étaient remplies par des appareils différents et séparés. Il en résulte, non seulement une meilleure rentabilisation de la matrice photosensible, mais aussi une réduction de l'encombrement des équipements ainsi qu'une possibilité d'extension du champ d'utilisation dûes aux éventuelles interactions de fonctions différentes réunies en un même équipement.

Selon l'invention, un dispositif photosensible comportant une matrice de points photosensibles, une source de lumière, la matrice photosensible comportant un réseau de conducteurs en ligne et un réseau de conducteurs en colonne, une surface photosensible constituée d'une pluralité de surfaces élémentaires comportant chacune un point photosensible, chaque point photosensible étant connecté entre un conducteur ligne et un conducteur colonne, la source de lumière produisant un rayonnement de lumière destiné à éclairer un document situé au-dessus de la surface photosensible, afin de permettre la lecture du document, est caractérisé en ce qu'il comporte en outre, d'une part, un crayon optique émettant une lumière et permettant d'éclairer au moins une surface élémentaire, et en ce qu'il comporte d'autre part, des moyens pour distinguer le conducteur ligne et le conducteur colonne entre lesquels est connecté le point photosensible situé dans la surface élémentaire éclairé par le crayon optique, permettant aussi l'utilisation dudit dispositif photosensible en écriture.

L'invention sera mieux comprise et d'autres effets et avantages qu'elle procure appararaîtront à la lecture de la description qui suit, faite à titre d'exemple non limitatif, et aux figures annexées, parmi lesquelles :
- la figure 1 montre schématiquement et partiellement un dispositif photosensible conforme à l'invention, et illustre comment il peut assurer notamment une fonction "lecteur de documents" et une fonction "tablette graphique" ;
- la figure 2 montre schématiquement une seconde version du détecteur photosensible, particulièrement en ce qui concerne la position d'une source de lumière servant à la fonction "lecteur de documents" ;
- la figure 3 montre schématiquement une matrice photosensible permettant d'assurer la fonction "lecteur de documents" et la fonction "tablette graphique" ;
- les figures 4a à 4c représentent des signaux explicatifs du fonctionnement de la matrice photosensible montrée à la figure 3, dans le cas de la fonction "lecteur de documents" ;
- les figures 5a à 5l représentent des signaux explicatifs du fonctionnement de la matrice photosensible dans le cadre de la fonction "tablette graphique" ;
- les figures 6a et 6b sont des coupes latérales selon deux directions orthogonales, montrant schématiquement à titre d'exemple non limitatif, une forme de réalisation de la matrice photosensible représentée à la figure 3 ;
- la figure 7 illustre schématiquement, par une vue en perspective, une seconde forme de réalisation de la matrice photosensible.

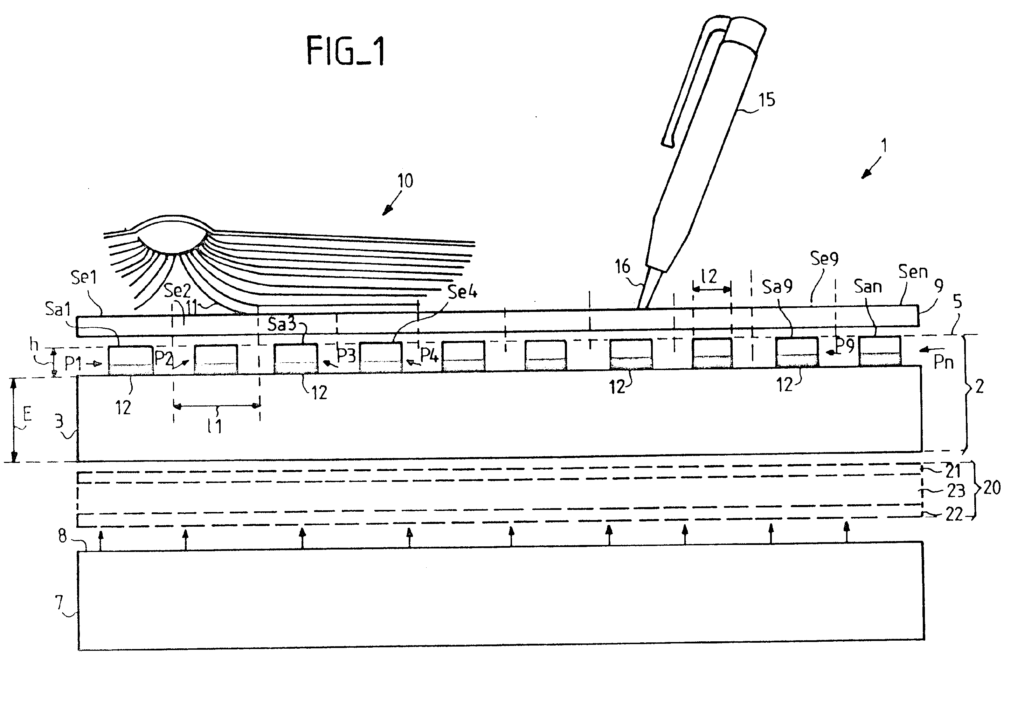

La figure 1 montre partiellement de manière schématique, un dispositif photosensible 1 conforme à l'invention.

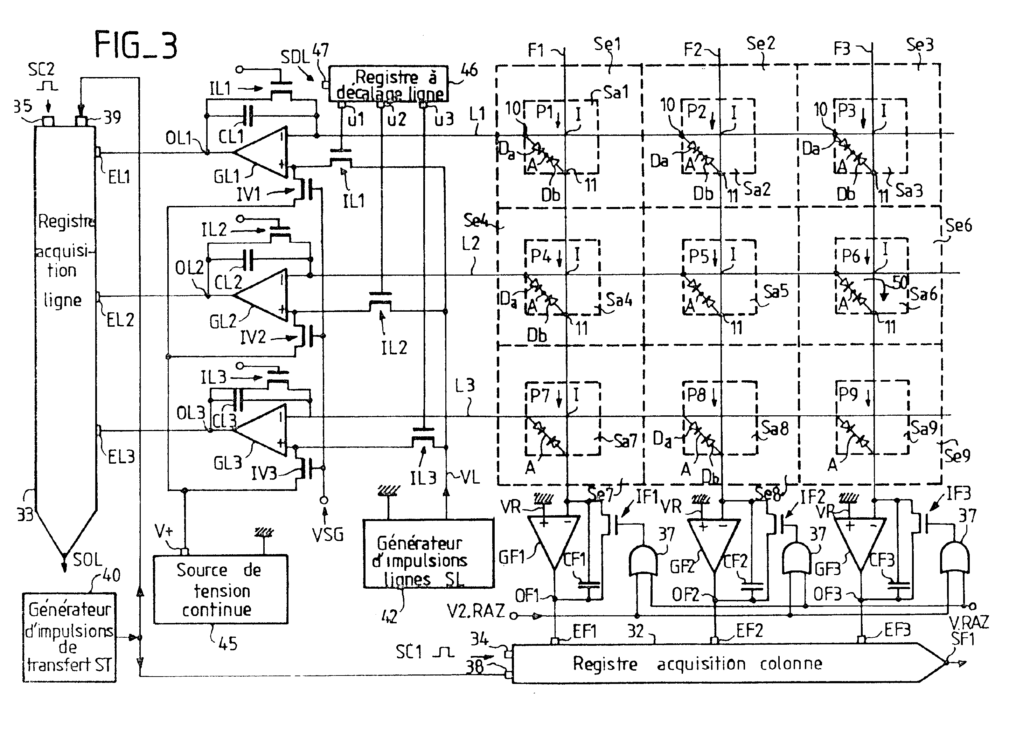

Le dispositif photosensible 1 comporte une matrice photosensible 2 ; cette dernière est représentée par un substrat 3 portant une pluralité de points photosensibles P1, P2,..., Pn comportant chacun au moins un élément photosensible, comme il est davantage expliqué dans une suite de la description relative à la figure 3.

A l'opposé du substrat 3, l'extrémité des points photosensibles P1 à Pn est contenue sensiblement dans un même plan symbolisé sur la figure 1 par une ligne en trait pointillé repérée 5, ce plan représentant une surface photosensible 5 qui s'étend dans un plan perpendiculaire à celui de la figure. La surface photosensible 5 est partagée en une pluralité de n surfaces élémentaires Se1 à Sen égales, contenant chacune un point photosensible P1 à Pn. Il est à noter que dans la représentation de la figure 1, les proportions entre les différentes dimensions ne sont pas respectées, pour une meilleure clarté de la figure : ainsi par exemple un côté d'une surface élémentaire Se1 à Sen peut avoir une longueur 11 de l'ordre de 200 micromètres, alors que la hauteur h d'un point photosensible P1 à Pn, au-dessus du substrat 3, est de l'ordre de seulement quelques micromètres ; le substrat 3 pouvant avoir lui-même une épaisseur E de l'ordre de 2 à 3 mm par exemple, notamment si ce substrat est en verre afin d'être transparent comme il est nécessaire dans cette version de l'invention.

En effet, sous le substrat 3, c'est-à-dire à l'opposé des points photosensibles P1 à Pn, est disposée une source de lumière 7 de type surfacique, dont la surface s'étend dans un plan perpendiculaire à celui de la figure, et qui délivre un rayonnement de lumière auxquels sont sensibles les points photosensibles P1 à Pn. Le flux de lumière (représenté par des flèches) est émis par une face 8 de la source de lumière 7 d'une manière relativement homogène sur toute cette surface 8. La source de lumière 7 peut contenir à cet effet par exemple des tubes fluorescents, et la surface 8 pouvant être constituée par une cloison parfaitement diffusante, en elle-même classique.

Il est à noter en outre que les points photosensibles P1 à Pn comportent des surfaces actives Sa1 à San (situées dans un plan perpendiculaire à celui de la figure et symbolisées sur cette dernière par la longueur 12 de leur côté) suffisamment faibles pour laisser passer la lumière émise par la source de lumière 7 en quantité suffisante pour éclairer un objet 10 ou document à lire, qui est plaqué contre la surface photosensible 5. En fait dans l'exemple non limitatif représenté à la figure 1, le document 10 est plaqué contre un écran transparent 9 en verre ou en plastique par exemple, qui remplit principalement une fonction de protection mécanique vis-à-vis de la surface photosensible 5. En pratique on considère qu'il faut que la surface active Sa1 à San d'un point photosensible P1 à Pn soit au plus 90 % de la surface élémentaire se1 à Sen, pour que la lumière émise par la source de lumière 7 éclaire et soit correctement distribuée sur une face 11 à analyser du document 10 ; la lumière est réfléchie par la face 11 du document 10, de sorte que la lumière provenant de la face 11 à analyser contient l'image de cette dernière et éclaire les points photosensibles P1 à Pn de la matrice 2.

Dans cette version du détecteur photosensible 1, la source de lumière 7 est disposée à l'opposé du document 10 par rapport à la matrice 2, et pour que les points photosensibles P1 à Pn ne soient sensibles qu'à la lumière provenant du document 10 à analyser, un écran 12 opaque est disposé entre le substrat 3 et chacun des points photosensibles P1 à Pn.

Selon une caractéristique de l'invention, le dispositif photosensible 1 comporte en outre un crayon optique 15 émettant un pinceau de lumière 16 à laquelle sont sensibles les points photosensibles P1 à Pn. Le crayon optique 15 étant émetteur de lumière, il est possible à un opérateur (non représenté), tenant le crayon optique 15 à la main, d'éclairer à l'aide du crayon optique 15 la surface photosensible 5 et ainsi de désigner une zone (formée d'une ou plusieurs surfaces élémentaires Se1 à Sen contiguës) donnée à un instant donné. L'opérateur peut ainsi désigner successivement des zones différentes sur la surface photosensible 5, pour constituer par exemple des repères fixes éloignés les uns des autres ; l'opérateur peut également éclairer la surface photosensible 5 de sorte à décrire sur celle-ci une courbe d'allure quelconque.

L'éclairement d'une surface élémentaire Se1 à Sen est détecté par le point photosensible P1 à Pn, contenu dans cette surface élémentaire, et qui délivre un signal qui permet de le localiser ; la localisation d'une succession de points photosensibles P1 à Pn adjacents permet de reconstituer une courbe tracée sur la surface photosensible 5 à l'aide du crayon optique 15.

Le dispositif photosensible 1 de l'invention peut en outre remplir une troisième fonction qui est une fonction d'affichage. A cet effet, la source de lumière 7 peut être constituée par exemple par un dispositif d'affichage qui, par sa face 8, projette une image qui est vue au travers de la matrice photosensible 2, c'est-à-dire au travers de la surface photosensible 5. Des essais ont montré que l'image qui était projetée dans ces conditions était visible au travers de la surface photosensible 5, dans des conditions correctes, quand la surface active Sa1 à San des points photosensibles P1 à Pn est égale ou inférieure à sensiblement 50 % d'une surface élémentaire Se1 à Sen.

La source de lumière 7 ou dispositif lumineux qui dans cette version représente en outre un dispositif d'affichage, peut être constituée par exemple par un panneau de diodes électroluminescentes (non représentées) disposées en lignes et en colonnes selon un arrangement matriciel, et dont la fonctionnement est en lui-même connu : dans le fonctionnement pour la lecture du document 10, toutes les diodes électroluminescentes sont actionnées et fournissent de la lumière ; pour le fonctionnement en tablette graphique, c'est-à-dire avec le crayon optique 15, toutes les diodes électroluminescentes sont éteintes et le dispositif lumineux 7 ne produit aucune lumière ; dans le fonctionnement avec affichage c'est-à-dire avec projection d'une image au travers de la surface photosensible 5, le réseau matriciel de diodes électroluminescentes est commandé, de manière conventionnelle pour produire l'image désirée : il est à noter que dans ce dernier cas il peut être particulièrement intéressant d'utiliser le crayon optique 15 pour porter par exemple des repères ou tracer une courbe sur l'image projetée par le dispositif lumineux 7.

On note que dans cette configuration le dispositif lumineux 7 est commun à la fonction lecteur de documents et à la fonction affichage d'images. Bien entendu, le dispositif lumineux 7 peut être d'un type différent, pour remplir à la fois la fonction source de lumière et la fonction dispositif d'affichage, il peut être constitué par exemple par un dispositif afficheur du type à plasma, en lui-même classique.

Il est possible également d'ajouter la fonction affichage d'images en utilisant un dispositif d'affichage à cristaux liquides, classique, qui est représenté par un rectangle en trait pointillé 20 et qui est interposé entre la matrice photosensible 2 et le dispositif lumineux 7 qui, dans ce cas, constitue uniquement une source de lumière. Le dispositif d'affichage à cristaux liquides 20 est commandé par des moyens traditionnels (non représentés) de sorte, soit à laisser passer la lumière émise par le dispositif lumineux 7 en tous les points de la face 8, (fonctionnement en lecteur de documents), soit commandé pour ne laisser passer la lumière qu'en des points déterminés de sorte à constituer une image qui peut être vue comme il a été précédemment mentionné, au travers de la surface photosensible 5.

Le dispositif d'affichage à cristaux liquides 20 comporte de manière habituelle deux cloisons ou substrats 21, 22 porteurs d'électrodes (non représentées), entre lesquels est aménagé un volume 23 rempli par le cristal liquide. En vue de simplifier la réalisation du dispositif photosensible 1, le substrat 3 appartenant à la matrice photosensible 2 peut également constituer la cloison ou substrat 21 du dispositif d'affichage à cristaux liquides 20.

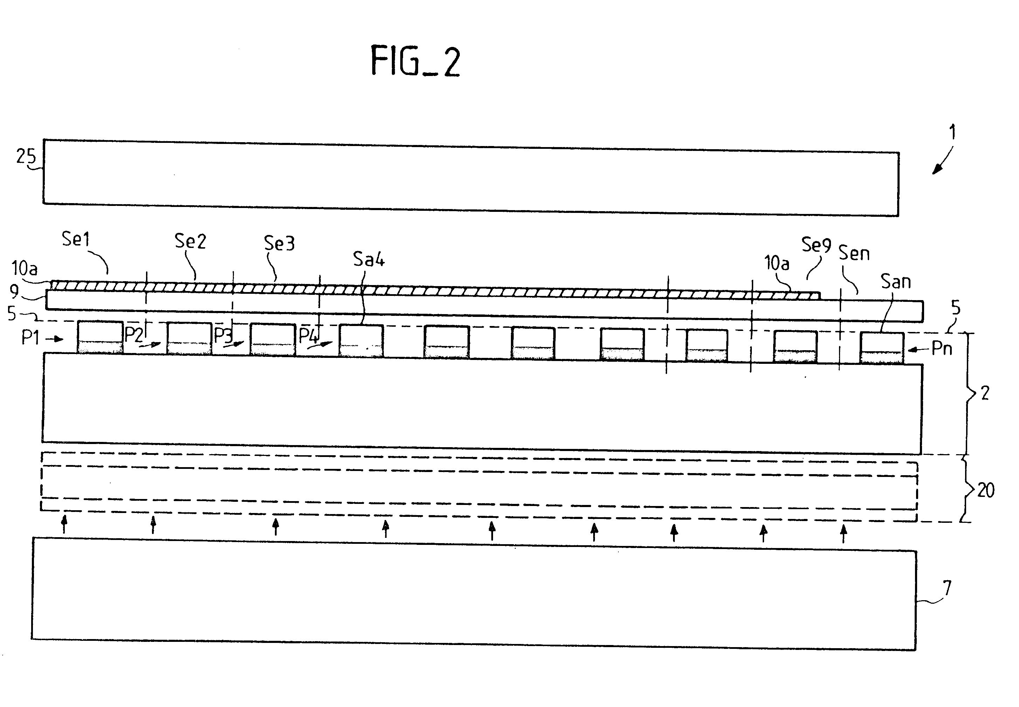

La figure 2 montre une autre version de l'invention dans laquelle le document 10a à analyser est d'un type transparent ou semi-transparent, comme par exemple un film radiographique. Dans ce cas, le document 10a ou film est posé sur l'écran ou glace de protection 9 c'est-à-dire au-dessus de la surface photosensible 5. La lecture du document 10a est obtenue à l'aide d'une source de lumière 25 de type surfacique qui est placée au-dessus du document 10a, ce dernier étant ainsi disposé entre la surface photosensible 5 et cette seconde source de lumière 25 ; les points photosensibles P1 à Pn captent chacun la lumière provenant sensiblement de la face en regard du document 10a analysé, l'image lumineuse de ce document étant cette fois formée par transmission de la lumière et non par réflexion comme dans le cas de l'exemple précédent. Dans cette configuration, pour assurer les fonctions de lecture de documents et de tablettes graphiques, il n'est pas obligatoire de disposer du dispositif lumineux 7, ni en tant que source de lumière ni en tant que dispositif d'affichage, ni de disposer du dispositif d'affichage à cristaux liquides 20. Cependant ces éléments peuvent être conservés.

La seconde source de lumière 25 peut être écartée du document à analyser 10a de sorte à laisser l'accès au crayon optique 15 (non représenté sur la figure 2). Il est à remarquer en outre que dans le cas d'un document tel qu'un film radiographique, le crayon optique 15 peut servir à porter des repères en surimpression de l'image elle-même, et qu'à cet effet le dispositif lumineux 7 en tant que source de lumière, peut être utile pour éclairer l'image portée par le document 10a tout en ayant une influence minime sur les points photosensibles P1 à Pn.

La figure 3 montre partiellement le schéma électrique du dispositif photosensible 1 selon l'invention, et illustre particulièrement, à titre d'exemple non limitatif, la matrice photosensible 2 et la structure des points photosensibles qu'elle comporte ; cette structure étant particulièrement intéressante en ce qu'elle permet le fonctionnement de la matrice, aussi bien dans la fonction "lecture de documents", que dans la fonction "tablette graphique".

La matrice 2 comporte une pluralité de points photosensibles P1, P2,..., P9 qui sont disposés en lignes et en colonnes, et qui sont constitués chacun par un premier et par un second éléments respectivement Da, Db montés en série l'un avec l'autre, au moins un de ces deux éléments Da, Db étant photosensible. Dans l'exemple non limitatif décrit et représenté à la figure 3, le premier et le second éléments Da, Db sont constitués chacun par une diode, les deux diodes Da, Db étant montées en série l'une avec l'autre et montées tête-bêche, c'est-à-dire avec des sens de conduction opposés l'une par rapport à l'autre ; un tel montage de points photosensibles étant décrit dans une demande de brevet français n° 86 14058 déposée le 9 Octobre 1986 au nom de THOMSON-CSF. Cette demande de brevet se rapporte à un dispositif photosensible à l'état solide, ayant une matrice photosensible dont les points photosensibles sont constitués d'une même manière que ci-dessus mentionnée, et cette demande de brevet décrit en détail le fonctionnement de tels points photosensibles, et décrit en outre un procédé de lecture et un procédé de fabrication d'une matrice comportant de tels points photosensibles ; aussi, cette demande de brevet français n° 86 14058 doit être considérée comme faisant partie de la présente description.

Dans l'exemple non limitatif décrit, le nombre de points photosensibles P1 à P9 est limité à 9 selon un assemblage matriciel 3 x 3 pour simplifier la figure 3, mais dans l'esprit de l'invention cet assemblage matriciel peut avoir une capacité beaucoup plus grande, de plusieurs millions de points par exemple comme il a été précédemment mentionné.

La matrice 2 comporte des conducteurs en ligne L1 à L3 et des conducteurs en colonne F1 à F3, le nombre de chaque type de ces conducteurs étant limité à 3 compte-tenu de l'exemple de la figure 3 où seulement 9 points photosensibles P1 à P9 sont représentés.

En pratique, et d'une manière en elle-même classique, mais non nécessairement, les points photosensibles P1 à P9 sont formés chacun à l'intersection d'un conducteur en ligne L1 à L3 et d'un conducteur en colonne F1 à F3. Chaque point photosensible P1 à P9 comporte une première extrémité 10 connectée à un conducteur ligne L1 à L3, et comporte une seconde extrémité 11 connectée à un conducteur colonne F1 à F3. Pour chaque point photosensible P1 à P9, le point de réunion entre la première diode Da et la seconde diode Db constitue une zone A où peuvent être stockées des charges engendrées par au moins une des deux diodes Da, Db ; la quantité de charges étant proportionnelle à l'éclairement du point photosensible, c'est-à-dire du ou des éléments photosensibles qu'il comporte.

En effet, les deux diodes Da, Db peuvent être des éléments photosensibles, mais selon une caractéristique de l'invention, il est suffisant que l'une seulement de ces deux diodes Da, Db soit photosensible pour permettre les deux modes de fonctionnement prévus, à savoir : le fonctionnement en lecteur de documents et le fonctionnement en tablette graphique. Comme il apparait clairement du fonctionnement expliqué dans la suite de la description, la diode Da ou Db qui est obligatoirement photosensible est celle qui, durant un éclairement des points photosensibles P1 à P9, est polarisée en inverse.

Dans l'exemple non limitatif de la description, pour chaque point photosensible P1 à P9, les premières et secondes diodes Da, Db sont des photodiodes, et elles sont montées de sorte que leur anode respectivement 10 et 11, soit reliée respectivement à une ligne L1 à L3 et à une colonne F1 à F3. Mais dans l'esprit de l'invention, les photodiodes Da, Db pourraient être montées selon des sens de conduction opposés à ceux représentés sur la figure 3.

Il est à noter en outre que par le terme diode on entend définir non seulement une diode semi-conductrice, mais aussi éventuellement un transistor ou phototransistor d'un type NIPIN ou PINIP par exemple, dès lors que la base de ce transistor est flottante c'est-à-dire non connectée.

Il est à noter en outre, comme il apparaît clairement aussi bien du fonctionnement décrit dans la demande de brevet français n° 86 14058 ci-dessus cité, que des explications qui suivent dans la présente description, celle des deux diodes Da, Db qui est obligatoirement photosensible, est toujours polarisée en inverse, de sorte qu'elle est toujours capable d'engendrer des photocharges si elle est éclairée. En conséquence la fonction d'un tel élément photosensible peut être assurée par un élément photosensible autre qu'une photodiode, et cet élément photosensible peut être constitué par exemple par une photorésistance.

D'autre part, en supposant, (comme représenté à la figure 3) que les premiers et seconds éléments Da, Db de chaque point photosensible P1 à P9 soient constitués par des diodes Da, Db dont la seconde diode Db est celle qui est obligatoirement photosensible, on note que la fonction assurée par la première diode Da est celle d'un commutateur ou interrupteur qui, quand la première diode Da est polarisée en direct est "passant" (c'est-à-dire qu'il présente une faible résistance), et qui, quand la première diode Da est polarisée en inverse est "ouvert" (c'est-à-dire qu'il présente une très grande résistance).

Le fonctionnement de la matrice 2, dans le cadre de la fonction "lecture de documents ", correspond au fonctionnement décrit dans la demande de brevet français n° 86. 14058 précédemment mentionnée, et nécessite notamment que, pour chaque point photosensible P1 à P9, durant l'éclairement de ces derniers, par la lumière provenant du document 10, 10a à lire, les deux diodes Da, Db soient polarisées en inverse ; ceci étant obtenu en portant les conducteurs colonne F1 à F3 à un potentiel donné ou tension de référence VR et d'autre part, en appliquant successivement à chacun des conducteurs en ligne L1 à L3 une impulsion de tension par rapport à la tension référence colonne VR ; cette impulsion est une impulsion positive compte-tenu du sens du montage des diodes Da, Db dans l'exemple non limitatif représenté à la figure 3.

Nous indiquons ci-après, à titre d'exemple non limitatif, un montage possible (d'autres agencements sont possibles pour obtenir le fonctionnement désiré). Chaque conducteur colonne F1 à F3 est relié à l'entrée négative "-" d'un amplificateur GF1 à GF3 monté en intégrateur ; un condensateur d'intégration CF1 à CF3 étant monté entre l'entrée négative "-" de l'amplificateur GF1 à GF3, et la sortie OF1 à OF3 de cet amplificateur. La seconde entrée positive "+" de chaque amplificateur GF1 à GF3 est reliée au potentiel de référence VR précédemment mentionné qui peut être la masse par exemple comme représenté à la figure 3. Chaque amplificateur intégrateur GF1 à GF3 comporte en outre un interrupteur IF1 à IF3 appelé interrupteur de remise à zéro, monté en parallèle avec le condensateur d'intégration CF1 à CF3 ; les interrupteurs de remise à zéro IF1 à IF3 sont constitués par de transistors MOS commandés par des signaux de remise à zéro V.RAZ. L'interrupteur de remise à zéro IF1 à IF3 d'un amplificateur intégrateur GF1 à GF3 donné, est maintenu "fermé" c'est-à-dire "passant" de manière à court-circuiter le condensateur d'intégration CF1 à CF3, sauf pendant la séquence de lecture du point photosensible P1 à P9 qui est relié à cet amplificateur. Les sorties OF1 à OF3 des amplificateurs GF1 à GF3 sont reliées à un registre d'acquisition de données analogiques 32 appelé registre acquisition colonne, constitué par exemple par un registre à décalage à entrée parallèle EF1 à EF3 et sortie SF1 série, du type CCD (Charge Coupled Device) par exemple.

Le schéma de connexion des conducteurs colonne F1 à F3 qui vient d'être décrit est un schéma classique, qui représente un dispositif de lecture et qui permet de faire l'acquisition des charges qui circulent sur ces conducteurs colonnes lors de la lecture des points photosensibles P1 à P9.

Par contre, au niveau des connexions de lignes L1 à L3, une complexité un peu plus grande que dans l'art antérieur permet d'utiliser une même structure des points photosensibles P1 à P9 pour les deux types de fonctionnement (lecteur de document et tablette graphique ).

Dans l'exemple non limitatif de la description, les conducteurs ligne L1 à L3 doivent être reliés non seulement à un dispositif d'adressage (comportant notamment un registre à décalage ligne 46 et un générateur d'impulsions 42) permettant d'appliquer une impulsion positive successivement à chacun des conducteurs ligne L1 à L3 pour le fonctionnement en lecteur de documents, mais aussi les conducteurs ligne L1 à L3 doivent être reliés à des moyens qui permettent, pour chaque point photosensible P1 à P9, de polariser l'une des deux diodes Da, Db en direct et de polariser l'autre en inverse (pour le fonctionnement en mode tablette graphique), et à des moyens qui permettent d'autre part de reconnaître à quel conducteur en ligne L1 à L3 est relié un point photosensible P1 à P9 qui est éclairé par le crayon optique 15 ; le conducteur colonne F1 à F3 auquel est relié le point photosensible ainsi éclairé étant reconnu à l'aide des amplificateurs intégrateurs GF1 à GF3.

Chacun des conducteurs ligne L1 à L3 est relié à l'entrée négative "-" d'un amplificateur intégrateur GL1 à GL3, du même type que les amplificateurs intégrateurs reliés aux colonnes F1 à F3, c'est-à-dire que le potentiel auquel est porté chaque conducteur ligne L1 à L3 correspond au potentiel de la seconde entrée ou entrée positive "+" de l'amplificateur GL1 à GL3. Pour chaque amplificateur GL1 à GL3, un condensateur d'intégration CL1 à CL3 est monté entre l'entrée négative "-" et la sortie OL1 à OL3 de cet amplificateur. En parallèle sur chacun des condensateurs d'intégration CL1 à CL3 est monté un interrupteur de remise à zéro IL1 à IL3 ; ces interrupteurs étant constitués par exemple par des transistors MOS commandés par de seconds signaux de remise à zéro V2.RAZ. Ces seconds signaux de remise à zéro V2.RAZ sont destinés à court-circuiter les condensateurs d'intégration CL1 à CL3 et CF1 à CF3 durant une phase donnée du fonctionnement en mode "tablette graphique", et ils sont appliqués également aux condensateurs d'intégration montés sur les amplificateurs GF1 à GF3 des conducteurs colonnes F1 à F3 ; à cette fin, les interrupteurs IF1 à IF3 montés sur les amplis GF1 à GF3 sont commandés par les premiers signaux de remise à zéro V.RAZ, ou par les seconds signaux de remise à zéro V2.RAZ, par l'intermédiaire de circuits "OU" 37. Les sorties OL1 à OL3 des amplificateurs GL1 à GL3 sont reliées à des entrées EL1 à EL3 d'un second registre d'acquisition 33 appelé registre d'acquisition lignes, constitué par exemple par un registre à décalage du type à entrée parallèle et à sortie SOL série. Dans l'exemple non limitatif décrit, les registres d'acquisition colonnes et lignes 32, 33 comportent respectivement une entrée de commande 34, 35 auxquelles sont appliqués des signaux de commande de chargement respectivement SC1, SC2, quand on désire charger dans ces registres 32, 33 les signaux qui sont appliqués à leurs entrées EF1 à EF3 et EL1 à EL3.

Les informations contenues dans les registres d'acquisition 32, 33 sont transférées vers des mémoires principales (non représentées), en elles-mêmes classiques, et ces informations sont ensuite traitées de manière conventionnelle de sorte à reconstruire une image formée sur la surface sensible 5 de la matrice 2, soit dans le mode lecteur de documents (uniquement pour le registre d'acquisition colonne 32 dans ce cas), soit dans le mode tablette graphique. La sortie des signaux contenus dans les registres d'acquisition 32, 33 est opérée sous la commande d'impulsions ou signaux de transfert ST appliquées à une entrée de commande de transfert 38, 39 que comportent respectivement le registre d'acquisition colonne 32 et le registre d'acquisition lignes 33 ; ces impulsions de transfert ST étant délivrées par un même générateur d'impulsions de transfert 40, de sorte à déterminer une relation de phase connue dans la sortie des signaux des deux registres d'acquisition 32, 33, en vue de désigner entre quel conducteur ligne L1 à L3 et quel conducteur colonne F1 à F3 était connecté un point photosensible P1 à P9 éclairé à un instant donné par le crayon optique 15 (montré à la figure 1).

Le potentiel d'une ligne L1 à L3 correspondant au potentiel qui est appliqué à l'entrée positive "+" de l'amplificateur GL1 à GL3 auquel ce conducteur en ligne est relié, l'entrée positive "+" de chacun des amplificateurs GL1 à GL3 peut être reliée, soit à un générateur d'impulsions ligne 42 qui délivre des impulsions SL de tension positive par rapport à la masse, soit reliée à une source de tension 45 continue qui délivre une tension positive par rapport à la masse, c'est-à-dire par rapport au potentiel des colonnes F1 à F3. A cette fin, chaque entrée positive "+" des amplificateurs GL1 à G13 est reliée d'une part au générateur d'impulsions ligne 42 par l'intermédialre d'un interrrupteur d'impulsions ligne IL1 à IL3, et reliée d'autre part à la source de tension continue 45 par l'intermédialre d'un autre interrupteur IV1 à IV3 ; au niveau d'un amplificateur GL1 à GL3, seulement l'un ou l'autre de ces interrupteurs étant rendu "passant" à un même instant.

Les interrupteurs IL1 à IL3 sont constitués par des transistors MOS, et sont commandés respectivement par une sortie U1, U2, U3 d'un registre à décalage ligne 46, de sorte à relier successivement les conducteurs ligne L1, L2, L3 au générateur d'impulsions ligne 42, cette succession s'opérant sous la commande de signaux de décalage ligne SDL qui sont appliqués à une entrée de commande de décalage 47 du registre à décalage 46.

Les autres interrupteurs IV1 à IV3 également reliés aux entrées positives "+" des amplificateurs GL1 à GL3 sont également des transistors MOS, et sont commandés simultanément par un signal de tension continue VSG qui est établi en même temps qu'est établie la fonction " tablette graphique".

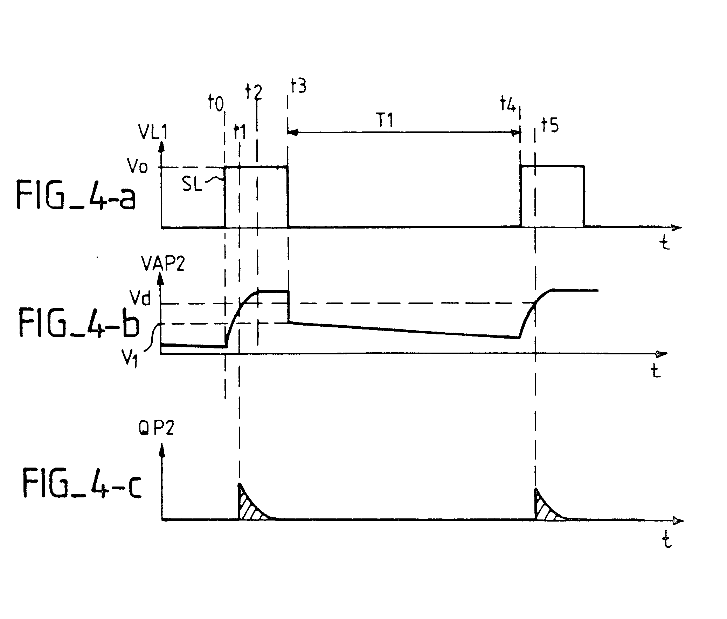

Dans cette configuration, quand c'est la fonction "lecteur de documents" qui est en cours, une impulsion de tension SL délivrée par le générateur d'impulsions ligne 42 est appliquée à l'entrée positive de l'amplificateur GL1, et cette impulsion positive se retrouve sur l'entrée négative "-" de cet amplificateur, c'est-à-dire sur le conducteur ligne L1, de sorte que l'impulsion SL est appliquée à tous les points photosensibles P1 à P3 reliés à ce conducteur ligne. Comme il est expliqué plus en détail à la figure 4 relative au fonctionnement en mode lecteur de documents, il résulte de l'application de cette impulsion ligne SL une injection de charges sur chacun des conducteurs colonne F1 à F3, ces charges correspondant chacune aux charges stockées dans les zones A des points photosensibles P1 à P3. Les signaux que constituent ces charges sont présents à la sortie des amplificateurs GF1 à GF3 sous forme de tension, et ces signaux sont injectés dans le registre d'acquisition colonnes 32. Les condensateurs d'intégration CF1 à CF3 montés sur les amplificateurs GF1 à GF3 sont ensuite court-circuités, et le générateur d'impulsions ligne 42 est relié à un conducteur ligne suivant L2 auquel est également appliquée une impulsion ligne SL qui conduit à injecter sur chacun des conducteurs colonne F1 à F3 un signal charge correspondant aux charges accumulées au point A des points photosensibles P4 à P6. Le registre d'acquisition colonne 32 ayant été préalablement vidé et les charges qu'il contenait transférées vers une mémoire principale comme il a été précédemment mentionné, le registre d'acquisition colonne 32 peut être à nouveau chargé par les charges contenues au point A des points photosensibles P4, P5, P6, comme dans l'exemple précédent ; et le même cycle est reconstitué pour le troisième conducteur ligne L3 et ainsi de suite jusqu'à lecture de tous les points photosensibles de toutes les lignes de la matrice ; les signaux correspondant à l'image entière du document à lire étant délivrés en sortie SF1 du registre d'acquisition colonne 32, ils peuvent être mémorisés dans une mémoire principale.

Pour le fonctionnement en mode table graphique, tous les interrupteurs IL1 à IL3 reliés aux entrées positives "+" des amplificateurs ligne GL1 à GL3 sont à l'état ouvert, et les interrupteurs de tension continue IV1 à IV3 sont tous à l'état fermé, c'est-à-dire que toutes les entrées positives "+" des amplificateurs ligne GL1 à GL3 sont reliées à la polarité positive V+ de la tension continue délivrée par la source de tension continue 45. Dans ces conditions, toutes les premières diodes Da sont polarisées en direct, c'est-à-dire qu'on retrouve aux différents points A une même tension que la tension délivrée par la source de tension continue 45, au seuil près de la diode Da. Par contre, la seconde diode Db de chaque point photosensible P1 à P9 reste polarisée en inverse et, si elle est éclairée, elle engendre des charges qui circulent sur le conducteur ligne et le conducteur colonne entre lesquels est relié le point photosensible P1 à P9 situé dans la surface élémentaire Se1 à Sen éclairée par le crayon optique 15. Par exemple, si le crayon optique éclaire la surface élémentaire Se6, c'est-à-dire le point photosensible P6, la zone A de ce dernier est à un potentiel positif voisin de celui délivré par la source de tension continue 45. Par suite, la seconde diode photosensible Db est polarisée en inverse et délivre des charges et un courant représenté par une flèche 50 circule sur la ligne L2 et la colonne F3 en traversant le point photosensible P6, c'est-à-dire en passant par les diodes Da, Db de ce dernier. Il en résulte une variation de tension en sortie OF3 du troisième amplificateur colonne GF3 ( diminution de tension) et, simultanément, une variation de tension à la sortie OL2 du second amplificateur ligne GL2 (augmentation de tension) ; ces variations de tension constituant des signaux qui permettent de distinguer le second conducteur ligne L2 et le troisième conducteur colonne F3 des autres conducteurs ligne et des autres conducteurs colonne, et par suite de déterminer que la surface élémentaire Se6 a été désignée ou éclairée par le crayon optique 15. A supposer que le pinceau de lumière 16 fourni par le crayon optique 15 (représenté sur la figure 1) éclaire simultanément plusieurs surfaces élémentaires contiguës, il y aura simultanément des signaux délivrés par des conducteurs en ligne contigus et par des conducteurs en colonne contigus, de sorte qu'il est possible de déterminer une zone centrale éclairée.

Dans le cas où c'est une courbe qui est décrite sur la surface photosensible 5, il y a successivement plusieurs points photosensibles P1 à P9 qui sont éclairés, mais pour chacun d'entre eux, c'est uniquement entre le conducteur ligne L1 à L3 et le conducteur colonne F1 à F3 entre lesquels le point photosensible est connecté qu'existe une simultanéité dans les signaux délivrés ; cette simultanéité devant être respectée ou repérée, lors de l'acquisition et du transfert de ces signaux, vers les mémoires principales d'une unité centrale de traitement (non représentée). Aussi les valeurs contenues en sortie OL1 à OL3 de tous les amplificateurs ligne GL1 à GL3 d'une part, et d'autre part, les valeurs présentes en sortie OF1 à OF3 de tous les amplificateurs colonne GF1 à GF3 sont chargées simultanément dans le registre d'acquisition ligne 33 pour les amplificateurs ligne GL1 à GL3, et dans le registre d'acquisition colonne 32 pour les amplificateurs colonne GF1 à GF3. Cette opération de chargement ayant été effectuée, tous les condensateurs d'intégration CL1 à CL3 et CF1 à CF3 sont déchargés c'est-à-dire court-circuités par les interrupteurs de remise à zéro qui sont eux-mêmes commandés par les seconds signaux de remise à zéro V2.RAZ. Tous les amplificateurs ligne et colonne GL1 à GL3 et GF1 à GF3 sont alors prêts à nouveau à intégrer le courant qui éventuellement est injecté dans le conducteur ligne L1 à L3 où le conducteur colonne F1 à F3 auxquels ces amplificateurs sont reliés ; on rappelle que le courant qui à un instant donné circule à la fois sur un conducteur ligne L1 à L3 et un conducteur colonne F1 à F3 correspond à la photocharge engendrée par la seconde diode Db du point photosensible P1 à P9 qui est éclairé à cet instant donné et qui est situé à l'intersection de ce conducteur ligne et de ce conducteur colonne, et en quelque sorte la reconnaissance du conducteur ligne L1 à L3 donne la coordonnée "Y" et la reconnaissance du conducteur colonne donne la coordonnée "X".

Pendant le temps où les amplificateurs ligne et colonne GL1 à GL3 et GF1 à GF3 sont aptes à intégrer le courant qui leur est injecté, les données ou signaux contenus dans les registres d'acquisition 32, 33 peuvent être transférés vers des mémoires principales : ceci est accompli en appliquant simultanément aux deux registres d'acquisition 32, 33 les mêmes impulsions de commande de transfert ST délivrées par le générateur de signaux de transfert 40. Ces signaux de transfert ST sont délivrés à une fréquence par exemple de 1 MHz : dans ces conditions, en supposant que la matrice 2 soit une matrice de par exemple 4 millions de points photosensibles formés à l'aide de 2 000 conducteurs ligne et 2 000 conducteurs colonne, le transfert simultané des 2 000 données stockées dans le registre d'acquisition ligne 33 et 2000 données stockées dans le registre d'acquisition colonne 32, est effectué dans un temps de 2 millisecondes. Si les côtés d'une surface élémentaire Se1 à Se9 ont une même longueur 11 de l'ordre de 100 micromètres par exemple, et que d'autre part la vitesse de déplacement d'un pinceau lumineux sur la surface photosensible 5 soit de l'ordre de 3 à 4 cm par seconde, le temps qui s'écoule entre le début de l'éclairement d'une surface élément Se1 à Se9 et l'instant où cette surface élémentaire a été entièrement éclairée est largement supérieur au temps de transfert des données ci-dessus mentionné, de sorte que l'acquisition des données relatives à une image complète de la surface photosensible 5 peut être effectuée pendant le temps nécessaire à traverser une surface élémentaire.

Dans l'exemple non limitatif représenté à la figure 3, les surfaces actives Sa1 à Sa9 des points photosensibles P1 à P9 sont largement inférieures aux surfaces élémentaires Se1 à Se9. Par le terme **largement inférieures** nous entendons définir que ces surfaces actives Sa1 à Sa9 sont plus petites que les surfaces élémentaires Se1 à Se9 non seulement pour éviter des courts-circuits entre des points photosensibles adjacents comme c'est le cas dans la pratique, mais suffisamment inférieures pour en outre laisser passer une quantité de lumière suffisante à éclairer le document 10, 10a à analyser, ou pour projeter une image dans des conditions satisfaisantes, comme il a été expliqué en référence à la figure 1 ; la surface active Sa1 à Sa9 d'un point photosensible p1 à p9 correspondant à la section de l'élément photosensible que comporte ce dernier, c'est-à-dire généralement à la surface de croisement entre les conducteurs ligne L1 à L3 et les conducteurs colonne F1 à F3 et qui est donnée par la largeur de ces conducteurs.

Les figures 4a à 4c illustrent le fonctionnement de la matrice photosensible 2 dans le mode lecteur de documents qui a été expliqué en référence à la figure 3.

La figure 4a, montre l'application au premier conducteur ligne L1 d'une impulsion ligne SL, délivrée par le générateur d'impulsions ligne 42, de sorte à illustrer particulièrement le fonctionnement du second point photosensible P2 ;
- la figure 4b représente les variations de potentiel VA, dans la zone A du second point photosensible P2 situé à l'intersection du conducteur en ligne L1 et du conducteur colonne F2 ;
- la figure 4c illustre la corrélation dans le temps entre les charges à délivrées par le point photosensible P2 et l'application des impulsions ligne SL. Il est à noter que, à la figure 4c, sont représentées seulement des charges engendrées par éclairement, et ne sont pas représentées des charges qui peuvent circuler sur les conducteurs colonnes F1 à F3 par suite uniquement des variations de tension appliquées aux points photosensibles.

A la figure 4a, à un instant t0, débute une impulsion ligne SL qui atteint une amplitude V0, cette amplitude V0 est conservée jusqu'à un instant t3. La figure 4b montre qu'avec le début de l'impulsion SL, la tension Va dans la zone A croît, depuis l'instant t0, pour atteindre une valeur sensiblement égale à la valeur V0 à un instant t2 qui précède l'instant t3. La figure 4c montre qu'une quantité de charge Q2 circule sur la colonne F2, charge qui est engendrée par le second point photosensible P2 à un instant t1 compris entre l'instant t0 et l'instant t2 ; cet instant t1 correspondant au moment où la première diode Da passe en polarisation directe. A l'instant t3, l'impulsion SL appliquée au conducteur ligne L1 (figure 4a) passe de la valeur V0 à zéro de sorte que les deux diodes Da et Db sont polarisées en inverse et se comportent comme des capacités ; on note que la tension Va au point A (figure 4b) est passée à une valeur V1 sensiblement égale à la moitié de V0, ce qui confirme que les deux diodes Da et Db sont polarisées en inverse. Aussi à partir de l'instant t3, des charges peuvent être stockées dans la zone A, engendrées par l'éclairement du point photosensible P2. L'accumulation des charges conduit à une diminution de la tension VA dans la zone A (comme représenté à la figure 4b). A l'instant t4, une seconde impulsion ligne SL, appliquée au premier conducteur ligne L1, engendre une variation de la tension VA (figure 4b) : la tension VA croît pour atteindre à un instant t5 une valeur Vd à laquelle la première diode Da repasse en direct d'où il résulte l'injection d'une seconde charge Q sur la seconde colonne F2 ; ce cycle étant répété d'une même manière tant que dure la lecture d'un document. Un fonctionnement semblable est obtenu pour tous les points photosensibles P1 à P9 de la matrice photosensible 2, par application des impulsions ligne SL à chacun des conducteurs en ligne L1 à L3, successivement, ceci pendant le temps T1 compris entre deux impulsions de signaux ligne SL appliqués à un même conducteur ligne.

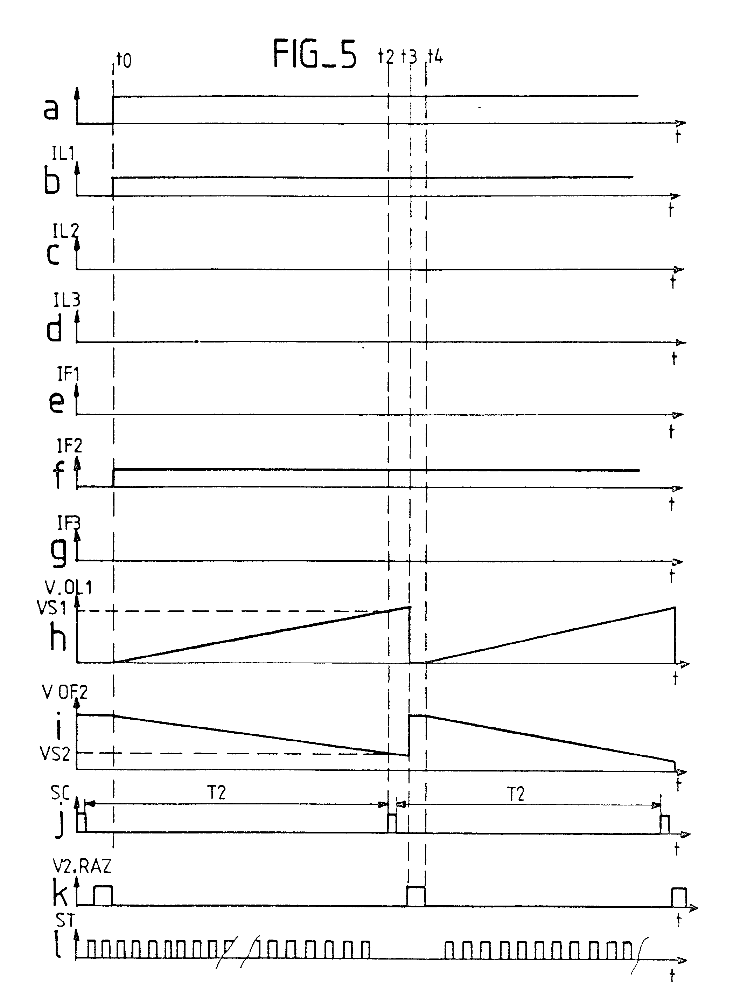

Les figures 5a à 5l illustrent le fonctionnement de la matrice photosensible 2 dans le cas du fonctionnement en tablette graphique.

En supposant qu'à partir d'un instant t0 on éclaire uniquement un point photosensible, le second point photosensible P2 par exemple, cet éclairement est illustré sur la figure 5a par un créneau qui débute à l'instant t0. Les figures 5b et 5f montrent respectivement qu'à l'instant t0 débute la circulation d'un courant I sur le premier conducteur ligne L1 et sur le second conducteur colonne F2 ; les figures 5c, 5d, 5e, 5g, montrent qu'aucun courant ne circule sur les autres conducteurs ligne et conducteurs colonne quand seul le second point photosensible P2 est éclairé. La figure 5h illustre une variation de tension de sortie V.OL1 engendrée à la sortie du premier amplificateur ligne GL1 par l'intégration du courant IL1 ; et la figure 5i montre une variation de tension de sortie V.OF2 engendrée à la sortie du second amplificateur colonne GF2 par le courant colonne IF2.

La figure 5j montre qu'à un instant t2 le signal de commande de chargement SC est appliqué aux registres d'acquisitions 32, 33, afin de charger dans ces derniers les signaux qui correspondent aux tensions de sortie des amplificateurs GL1 à GL3 et GF1 à GF3. Du fait que seul le second point photosensible P2 est éclairé, seules sont modifiées les tensions de sortie V.OL1 et V.OF2 (figures 5h et 5j) qui correspondent respectivement au premier amplificateur ligne GL1 et au second amplificateur colonne GF2 ; les signaux ainsi chargés étant les niveaux de tension VS1, VS2 que comportent, à l'instant t2, les tensions de sortie V.OL1 et V.OF2 (figures 5h et 5i).

La figure 5k illustre l'application du second signal de remise à zéro V2.RAZ, à un instant t3 qui suit la fin du signal SC de commande de chargement ; le second signal de remise à zéro V2.RAZ sert à court-circuiter tous les condensateurs d'intégration CL1 à CL3 et CF1 à CF3, de sorte à préparer tous les amplificateurs intégrateurs ligne et colonne GL1 à GL3 et GF1 à GF3 à intégrer un éventuel courant sur une ligne ou une colonne, au cours d'un cycle suivant. Le cycle suivant débute à un instant t4, correspondant à la fin du signal V2.RAZ, à partir duquel sont répétées les opérations ci-dessus décrites. On voit que dans ce fonctionnement les amplificateurs intégrateurs GL1 à GL3 , chacun relié à un conducteur en ligne L1 à L3, et les amplificateurs colonne GF1 à GF3 chacun relié à un conducteur colonne F1 à F3, remplissent une fonction de détecteur de courant.

En supposant que le fonctionnement en mode tablette graphique ait débuté avant le premier instant t0, le cycle de fonctionnement qui vient d'être expliqué a donc déjà eu lieu, c'est-à-dire que les données ont déjà été transférées dans les registres d'acquisition 32, 33. Les données ou signaux contenus dans les registres d'acquisitions 32, 33 sont transférés vers les mémoires principales durant un temps de transfert T2 compris entre la fin d'un signal de commande de chargement SC et le début du signal de commande de chargement SC suivant, comme représenté à la figurée 5j. Ce transfert des données contenues dans les registres d'acquisitions 32, 33 est opéré en appliquant, durant les temps de transfert T2, les impulsions de transfert ST (représentées à la figure 51) simultanément aux deux registres d'acquisitions 32, 33.

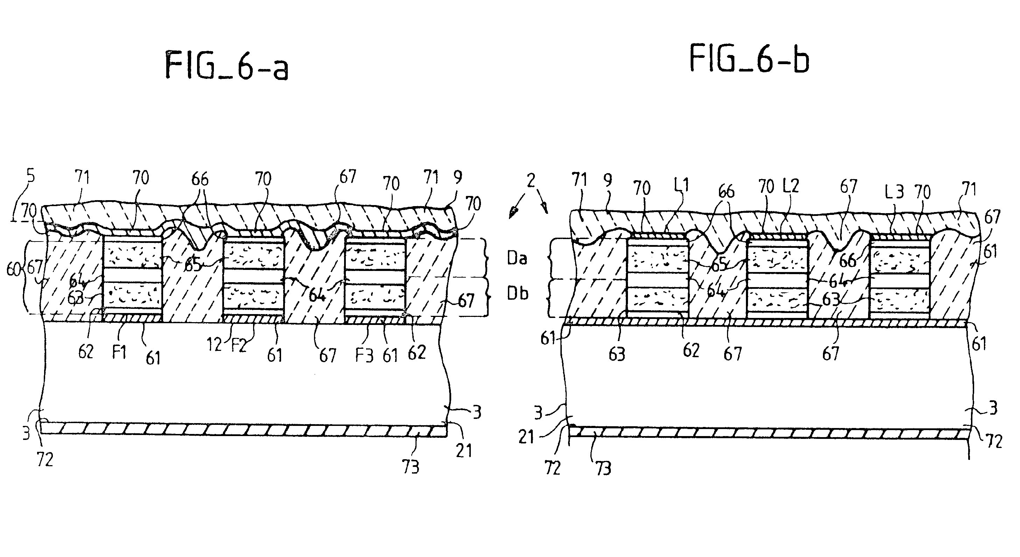

Les figures 6a et 6b sont des coupes latérales selon deux directions orthogonales, qui montrent, à titre d'exemple non limitatif et de manière schématique, une première forme de réalisation d'une matrice photosensible 2 conforme à l'invention.

La matrice photosensible 2 est formée sur un substrat 3 transparent, par exemple en verre ou encore en quartz. Sur le substrat 3 est déposée une couche 61 en un matériau électriquement conducteur, opaque à la lumière, en chrome ou molybdène par exemple. Cette couche conductrice 61 est gravée de sorte à constituer les conducteurs colonne F1 à F3. Il est à noter que les conducteurs colonne étant opaques, ils peuvent constituer les écrans 12 montrés sur la figure 1, et qui sont disposés entre le substrat et les points photosensibles P1 à Pn. La couche conductrice 61 est recouverte, après gravure, par un empilement 60 de plusieurs couches semiconductrices 62, 63, 64, 65, 66 destinées à constituer les première et seconde diodes Da et Db disposées l'une au-dessus de l'autre ; ces deux diodes Da, Db étant dans l'exemple non limitatif décrit toutes les deux des photodiodes : on trouve d'abord au-dessus de la couche conductrice 61, une couche 62 de silicium amorphe hydrogéné, dopé avec une impureté de type P ; puis au-dessus de la couche 62 en silicium dopé P on trouve une couche 63 en silicium amorphe hydrogéné intrinsèque ; ensuite au-dessus de la couche 63 de silicium amorphe intrinsèque, on trouve une couche de silicium amorphe hydrogéné 64 dopé avec une impureté de type N, du phosphore par exemple. On a ainsi déposé les couches semiconductrices à partir desquelles sont constituées les secondes diodes Db ; la troisième couche semiconductrice 64 formée en silicium amorphe hydrogéné dopé avec une impureté de type N étant commune également aux premières diodes Da. On trouve ensuite, au-dessus de cette troisième couche semiconductrice 64 de silicium dopé N, une couche 65 en silicium amorphe hydrogéné intrinsèque, puis enfin est déposée une couche 66 en silicium amorphe hydrogéné dopé avec une impureté de type P, du bore par exemple. Les cinq couches semiconductrices 62, 63, 64, 65, 66 sont ensuite gravées selon un motif d'ilôts. Au-dessus de la dernière couche 66 en silicium amorphe dopé P, est déposée une couche 67 en un matériau électriquement isolant, et transparent en nitrure de silicium par exemple. De manière classique, des ouvertures sont réalisées dans cette dernière couche isolante 67, au-dessus des premières diodes Da, de sorte à mettre en contact ces dernières avec une couche 70 en matériau électriquement conducteur et transparent, en oxyde d'indium-étain (ITO) par exemple, cette couche conductrice 70 étant gravée pour constituer les conducteurs en ligne L1 à L3.

Il peut être déposée en outre, au-dessus de la couche 70, après que cette dernière ait été gravée pour constituer les conducteurs en ligne L1 à L3, une couche isolante transparente 71 en nitrure de silicium par exemple dont le rôle est de réaliser une protection mécanique, et qui permet ainsi éventuellement, de remplacer la glace ou écran transparent 9 de protection placé au-dessus de la surface photosensible 5 (montré sur la figure 1).

Il est possible, en outre, d'utiliser le substrat 3 de la matrice photosensible 2, pour réaliser l'une des cloisons, la première cloison 21 par exemple, du dispositif d'affichage à cristaux liquides 20 montré sur la figure 1. Il suffit à cet effet de déposer une couche électriquement conductrice 73 et transparente, en oxyde d'indium-étain (ITO) par exemple, sur une face 72 du substrat 3 qui est opposée aux diodes Da, Db ; cette couche conductrice transparente constituant par exemple l'électrode de surface pleine que comporte de manière classique un dispositif d'affichage à cristaux liquides.

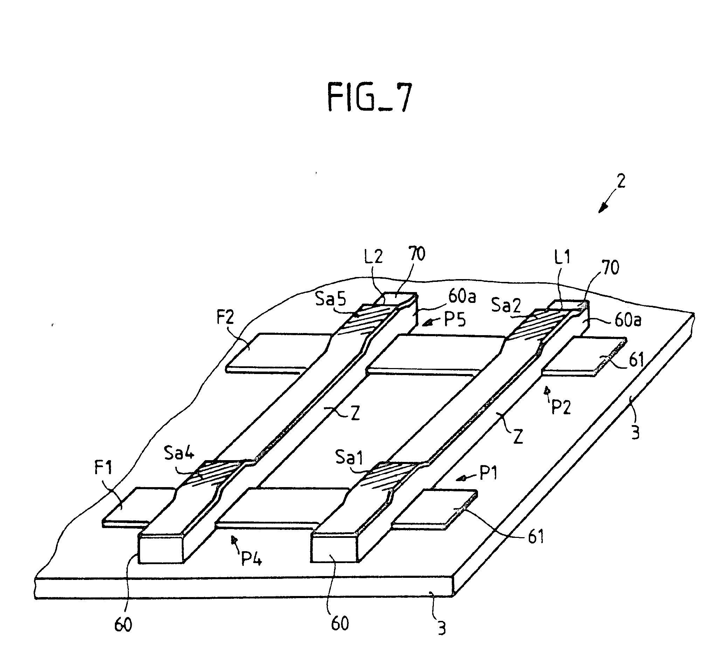

La figure 7 est une vue en perspective qui montre schématiquement et partiellement, la matrice photosensible 2 dans une autre forme de réalisation. Cette nouvelle forme de réalisation présente l'avantage, par rapport à la forme de réalisation montrée aux figures 6a, 6b, d'exiger moins d'opérations de masquage et de gravure.

Dans l'exemple non limitatif représenté à la figure 7, la couche électriquement conductrice 61 a été déposée sur le substrat 3 puis gravée de sorte à constituer les conducteurs colonne F1, F2. Sur les conducteurs colonne, sont ensuite déposées les 5 couches semiconductrices 61 à 65 qui forment un empilement 60 destiné à constituer les diodes superposées Da et Db. Ensuite, au-dessus de l'empilement 60 de couches semiconductrices, on dépose directement la couche électriquement conductrice supérieure 70, transparente, destinée à être gravée pour former les conducteurs ligne L1 à L3. On grave ensuite simultanément la couche électriquement conductrice 70 supérieure et l'empilement 60 de couches semiconductrices, de sorte que l'empilement 60, après gravure, constitue des bandes 60a situées sous les conducteurs ligne L1, L2 et ayant par conséquent une même forme et une même surface que ces conducteurs L1, L2. Dans cette forme de réalisation , où l'empilement 60 de couches semiconductrices n'est pas gravé en forme d'ilôts mais gravé d'une même manière que les conducteurs ligne L1, L2, les points photosensibles P1, P2, P4, P5 qui sont ainsi réalisés sont situés à l'intersection des conducteurs en ligne L1, L2 et des conducteurs en colonne F1, F2. La surface active Sa1, Sa2, Sa4, Sa5 (représentée par une surface hachurée sur la figure 7) des points photosensibles P1, P2, P4, P5, est constituée uniquement par la surface d'intersection des conducteurs en ligne et des conducteurs en colonne L1, L2, F1, F2. C'est-à-dire que les diodes Da et Db superposées ne sont constituées qu'entre les surfaces de croisement des conducteurs ligne et colonne, du fait notamment que c'est uniquement dans le volume situé sous les surfaces actives Sa1, Sa2, Sa4, Sa5 qu'est établi un champ électrique suffisant. Par suite la résistance présentée par des zones Z situées entre deux points photosensibles adjacents et situés sous un même conducteur ligne (les points photosensibles P1 et P2 par exemple), est grande et ces points photosensibles ne sont pas court-circuités. Bien entendu cette technique est rendue possible par le fait que les surfaces actlves Sa1 à Sa9 ont une surface "largement inférieure" à la surface d'une surface élémentaire Se1 à Se9.

## Revendications

1. Dispositif photosensible comportant au moins une source de lumière (7, 25), une matrice photosensible (2), un dispositif d'adressage (46, 42) et un dispositif de lecture (32), la matrice photosensible comportant un réseau de conducteur en ligne (L1 à L3) et un réseau de conducteurs en colonne (F1 à F3), la matrice photosensible (2) ayant une surface photosensible (5) formée d'une pluralité de surfaces élémentaires (Se1 à Se9) ayant chacune un point photosensible (P1 à P9), chaque point photosensible étant connecté entre un conducteur ligne (L1 à L3) et un conducteur colonne (F1 à F3), la source de lumière (7, 25) produisant un rayonnement de lumière destiné à éclairer un document (10, 10a) situé au-dessus de la surface photosensible (5), afin de permettre la lecture du document, caractérisé en ce qu'il comporte en outre, d'une part, un crayon optique (15) émettant un rayonnement de lumière (16) et permettant d'éclairer au moins une surface élémentaire (Se1 à Se9), et en ce qu'il comporte d'autre part, des moyens (Da, Db, GL1 à GL3, GF1 à GF3, 45, 33,) pour distinguer le conducteur ligne (L1 à L3) et le conducteur colonne (F1 à F3) entre lesquels est connecté le point photosensible (P1 à P9) situé dans la surface élémentaire (Se1 à Se9) éclairée par le crayon optique (15), permettant aussi l'utilisation dudit dispositif photosensible en écriture.

2. Dispositif photosensible selon la revendication 1, caractérisé en ce que chaque point photosensible (P1 à P9) comporte deux éléments (Da, Db) montés en série, un premier élément (Da) étant constitué par un moyen de commutation et le second élément (Db) étant photosensible.

3. Dispositif photosensible selon la revendication 2, caractérisé en ce que le premier élément (Da) formant le moyen de commutation est une diode.

4. Dispositif photosensible selon la revendication 3, caractérisé en ce que la diode (Da) formant le moyen de commutation est une photodiode.

5. Dispositif photosensible selon l'une des revendications 2 à 4, caractérisé en ce que le second élément (Db) est constitué par une diode photosensible.

6. Dispositif photosensible selon l'une des revendications 2 à 4, caractérisé en ce que le second élément (Db ) est une photorésistance.

7. Dispositif photosensible selon la revendication 3, caractérisé en ce qu'il comporte des moyens (45, IV1 à IV3) pour polariser en direct la diode (Da) formant l'élément de commutation.

8. Dispositif photosensible selon l'une des revendications 1, 2 ou 3, caractérisé en ce que chaque point photosensible (P1 à P9) comporte deux diodes (Da, Db) montées en série avec des sens de conductions opposés, au moins une des deux diodes étant photosensible.

9. Dispositif photosensible selon la revendication 8, caractérisé en ce qu'il comporte des moyens (45, IV1 à IV3) pour polariser les deux diodes (Da, Db) de chaque point photosensible (P1 à P9) de sorte qu'une première diode (Da) soit polarisée en direct et que la seconde diode (Db) soit polarisée en inverse, au moins la seconde diode (Db) étant photosensible.

10. Dispositif photosensible selon l'une des revendications précédentes, caractérisé en ce que les points photosensibles (P1 à P9) ont une surface active (Sa1,à Sa9) largement inférieure à une surface élémentaire (Se1 à Se9).

11. Dispositif photosensible selon la revendication 10, caractérisé en ce que les surfaces actives (Sa1 à Sa9) sont égales ou inférieures à sensiblement 90 % d'une surface élémentaire (Se1 à Se9).

12. Dispositif photosensible selon l'une des revendications précédentes, caractérisé en ce que la source de lumière (7) est située sous la matrice photosensible (2), à l'opposé du document (10).

13. Dispositif photosensible selon la revendication 12, caractérisé en ce qu'un écran (12) opaque à la lumière est interposé entre la source de lumière (7) et les points photosensibles (P1 à P9).

14. Dispositif photosensible selon l'une des revendications précédentes, caractérisé en ce qu'il comporte en outre un dispositif d'affichage (7, 20) disposé sous la matrice photosensible (2), de sorte à projeter une image qui est visible au travers de la matrice photosensible (2).

15. Dispositif photosensible selon la revendication 14, caractérisé en ce que le dispositif d'affichage (20) est du type à cristaux liquides.

16. Dispositif photosensible selon la revendication 15, caractérisé en ce que le dispositif d'affichage à cristaux liquides (20) est disposé entre la matrice photosensible (2) et la source de lumière (7).

17. Dispositif photosensible selon la revendication 14, caractérisé en ce que le dispositif d'affichage (7) constitue en outre une source de lumière.

18. Dispositif photosensible selon l'une des revendications 1 à 11, caractérisé en ce que la source de lumière (25) est située au-dessus de la surface photosensible (5).

19. Dispositif photosensible selon l'une des revendications 8 à 18, caractérisé en ce que la matrice photosensible (2) comporte un substrat (3) sur lequel sont réalisés les conducteurs colonne (F1 à F3), et en ce que les deux diodes (Da, Db) d'un point photosensible (P1 à P9) sont formées à partir d'un empilement (60) de cinq couches semiconductrices (62, 63, 64, 65, 66) superposées, la troisième couche (64) ou couche du milieu étant commune aux deux diodes (Da, Db).

20. Dispositif photosensible selon l'une des revendications précédentes, caractérisé en ce que la matrice photosensible (2) comporte un substrat (3) portant un empilement (60) de couches semiconductrices disposées entre des conducteurs en colonne (F1 à F3) et des conducteurs en ligne (L1 à L3), l'empilement (60) de couches semiconductrices étant gravé de sorte à constituer des bandes (60a) situées chacune sous chaque conducteur ligne (L1 à L3) et obtenues par une gravure simultanée des conducteurs en ligne (L1 à L3) et de l'empilement ( 60) de couches semiconductrices.

21. Dispositif photosensible selon la revendication 20, caractérisé en ce que la surface active (Sa1) d'un point photosensible (P1 à P9) est égale ou inférieure à sensiblement 50 % d'une surface élémentaire (Se1 à Se9).

22. Dispositif photosensible selon la revendication 15 , caractérisé en ce que la matrice photosensible (2) comporte un substrat (3) transparent qui constitue en outre une cloison (21) du dispositif d'affichage (20).

23. Dispositif photosensible selon l'une des revendications précédentes, caractérisé en ce que la matrice photosensible (2) comporte un substrat (3) portant un empilement (60) de couches semi-conductrices disposées entre des conducteurs en colonne (F1 à F3) et des conducteurs en ligne (L1 à L3), et en ce qu'une couche isolante et transparente (71) est déposée à l'opposé du substrat pour former un écran de protection mécanique (9).

## Patentansprüche

1. Photoempfindliche Vorrichtung mit mindestens einer Lichtquelle (7, 25), einer photoempfindlichen Matrix (2), einer Adressiervorrichtung (46, 42) und einer Lesevorrichtung (32), welche photoempfindliche Matrix ein Gitter aus Zeilenleitern (L1 bis L3) und ein Gitter aus Spaltenleitern (F1 bis F3) aufweist, wobei die photoempfindliche Matrix (2) eine photoempfindliche Fläche (5) aufweist, die durch mehrere Elementarflächen (Se1 bis Se9) gebildet wird, von denen jede einen photoempfindlichen Punkt (P1 bis P9) aufweist, wobei jeder photoempfindliche Punkt zwischen einen Zeilenleiter (L1 bis L3) und einen Spaltenleiter (F1 bis F3) geschaltet ist, wobei die Lichtquelle (7, 25) Lichtstrahlung erzeugt, die dazu dient, ein Dokument (10, 10a) zu beleuchten, das über der photoempfindlichen Fläche (5) angeordnet ist, um das Lesen des Dokuments zu erlauben, **dadurch gekennzeichnet**, daß sie ferner einerseits einen optischen Griffel (15) aufweist, der Lichtstrahlung (16) aussendet und es erlaubt, mindestens eine Elementarfläche (Se1 bis Se9) zu beleuchten, und daß sie andererseits Mittel (Da, Db, GL1 bis GL3, GF1 bis GF3, 45, 33) aufweist, um die Zeilenleiter (L1 bis L3) und die Spaltenleiter (F1 bis F3) voneinander zu unterscheiden, zwischen die der photoempfindliche Punkt (P1 bis P9) geschaltet ist, der in der vom optischen Griffel (15) beleuchteten Elementarfläche (Se1 bis Se9) angeordnet ist, was auch die Verwendung dieser photoempfindlichen Vorrichtung zum Schreiben zuläßt.

2. Photoempfindliche Vorrichtung nach Anspruch 1, **dadurch gekennzeichnet**, daß jeder photoempfindliche Punkt (P1 bis P9) zwei in Reihe geschaltete Elemente (Da, Db) aufweist, wobei ein erstes Element (Da) durch ein Schaltmittel gebildet wird und das zweite Element (Db) photoempfindlich ist.

3. Photoempfindliche Vorrichtung nach Anspruch 2, **dadurch gekennzeichnet**, daß das erste Element (Da), das die Schalteinrichtung bildet, eine Diode ist.

4. Photoempfindliche Vorrichtung nach Anspruch 3, **dadurch gekennzeichnet**, daß die Diode (Da), die das Schaltmittel bildet, eine Photodiode ist.

5. Photoempfindliche Vorrichtung nach einem der Ansprüche 2 bis 4, **dadurch gekennzeichnet**, daß das zweite Element (Db) von einer photoempfindlichen Diode gebildet wird.

6. Photoempfindliche Vorrichtung nach einem der Ansprüche 2 bis 4, **dadurch gekennzeichnet**, daß das zweite Element (Db) ein Photowiderstand ist.

7. Photoempfindliche Vorrichtung nach Anspruch 3, **dadurch gekennzeichnet,** daß sie Mittel (45, IV1 bis IV3) aufweist, um die das Schaltelement bildende Diode (Da) in Vorwärtsrichtung vorzuspannen.

8. Photoempfindliche Vorrichtung nach einem der Ansprüche 1, 2 oder 3, **dadurch gekennzeichnet**, daß jeder photoempfindliche Punkt (P1 bis P9) zwei mit entgegengesetzten Leitungsrichtungen in Reihe geschaltete Dioden (Da, Db) aufweist, wobei mindestens eine der zwei Dioden photoempfindlich ist.

9. Photoempfindliche Vorrichtung nach Anspruch 8, **dadurch gekennzeichnet**, daß sie Mittel (45, IV1 bis IV3) aufweist, um die zwei Dioden (Da, Db) jedes photoempfindlichen Punkts (P1 bis P9) so vorzuspannen, daß eine erste Diode (Da) in Vorwärtsrichtung und die zweite Diode (Db) in Rückwärtsrichtung vorgespannt ist, wobei mindestens die zweite Diode (Db) photoempfindlich ist.

10. Photoempfindliche Vorrichtung nach einem der vorstehenden Ansprüche, **dadurch gekennzeichnet**, daß die photoempfindlichen Punkte (P1 bis P9) eine aktive Fläche (Sa1 bis Sa9) aufweisen, die deutlich größer ist als eine Elementarfläche (Se1 bis Se9).

11. Photoempfindliche Vorrichtung nach Anspruch 10, **dadurch gekennzeichnet**, daß die aktiven Flächen (Sa1 bis Sa9) gleich oder kleiner etwa 90 % einer Elementarfläche (Se1 bis Se9) sind.

12. Photoempfindliche Vorrichtung nach einem der vorstehenden Ansprüche, **dadurch gekennzeichnet**, daß die Lichtquelle (7) unter der photoempfindlichen Matrix (2), dem Dokument (10) entgegengesetzt, angeordnet ist.

13. Photoempfindliche Vorrichtung nach Anspruch 12, **dadurch gekennzeichnet**, daß eine lichtundurchlässige Abschirmung (12) zwischen die Lichtquelle (7) und die photoempfindlichen Punkte (P1 bis P9) eingefügt ist.

14. Photoempfindliche Vorrichtung nach einem der vorstehenden Ansprüche, **dadurch gekennzeichnet**, daß sie ferner eine Anzeigevorrichtung (7, 20) aufweist, die unter der photoempfindlichen Matrix (2) angeordnet ist, um ein Bild zu projizieren, das durch die photoempfindliche Matrix (2) hindurch sichtbar ist.

15. Photoempfindliche Vorrichtung nach Anspruch 14, **dadurch gekennzeichnet,** daß die Anzeigevorrichtung (20) vom Flüssigkristalltyp ist.

16. Photoempfindliche Vorrichtung nach Anspruch 15, **dadurch gekennzeichnet**, daß die Flüssigkristallanzeigevorrichtung (20) zwischen der photoempfindlichen Matrix (2) und der Lichtquelle (7) angeordnet ist.

17. Photoempfindliche Vorrichtung nach Anspruch 14, **dadurch gekennzeichnet**, daß die Anzeigevorrichtung (7) ferner eine Lichtquelle bildet.

18. Photoempfindliche Vorrichtung nach einem der Ansprüche 1 bis 11, **dadurch gekennzeichnet**, daß die Lichtquelle (25) über der photoempfindlichen Fläche (5) angeordnet ist.

19. Photoempfindliche Vorrichtung nach einem der Ansprüche 1 bis 18, **dadurch gekennzeichnet**, daß die photoempfindliche Matrix (2) ein Substrat (3) aufweist, auf dem Spaltenleiter (F1 bis F3) ausgebildet sind, und daß die zwei Dioden (Da, Db) eines photoempfindlichen Punkts (P1 bis P9) ausgehend von einem Stapel (60) aus fünf halbleitenden Schichten (62, 63, 64, 65, 66) übereinandergeordnet ausgebildet sind, wobei die dritte Schicht (64) oder mittlere Schicht den beiden Dioden (Da, Db) gemeinsam ist.

20. Photoempfindliche Vorrichtung nach einem der vorstehenden Ansprüche, **dadurch gekennzeichnet**, daß die photoempfindliche Matrix (2) ein Substrat (3) aufweist, das einen Stapel (60) halbleitender Schichten trägt, die zwischen den Spaltenleitern (F1 bis F3) und den Zeilenleitern (L1 bis L3) angeordnet sind, welcher Stapel (60) halbleitender Schichten so geätzt ist, daß er Bänder (60a) bildet, von denen jedes unter jedem Zeilenleiter (L1 bis L3) angeordnet ist und die durch eine gleichzeitige Ätzung der Zeilenleiter (L1 bis L3) und des Stapels (60) halbleitender Schichten erhalten wurden.

21. Photoempfindliche Vorrichtung nach Anspruch 20, **dadurch gekennzeichnet**, daß die aktive Fläche (Sa1) eines photoempfindlichen Punkts (P1 bis P9) gleich oder kleiner etwa 50 % einer elementaren Fläche (Se1 bis Se9) ist.

22. Photoempfindliche Vorrichtung nach Anspruch 15, **dadurch gekennzeichnet**, daß die photoempfindliche Matrix (2) ein durchsichtiges Substrat (3) aufweist, das ferner eine Trennwand (21) einer Anzeigevorrichtung (20) bildet.

23. Photoempfindliche Vorrichtung nach einem der vorstehenden Ansprüche, **dadurch gekennzeichnet**, daß die photoempfindliche Matrix (2) ein Substrat (3) aufweist, das einen Stapel (60) halbleitender Schichten trägt, die zwischen Spaltenleitern (F1 bis F3) und Zeilenleitern (L1 bis L3) angeordnet sind, und daß eine isolierende und durchsichtige Schicht (71) dem Substrat entgegengesetzt angeordnet ist, um einen mechanischen Schutzschirm (9) zu bilden.

## Claims

1. Photosensitive device including at least a light source (7, 25), a photosensitive matrix (2), an addressing device (46, 42) and a reading device (32), the photosensitive matrix including a network of conductors in a line (L1 to L3) and a network of conductors in a column (F1 to F3), the photosensitive matrix (2) having a photosensitive surface (5) formed of a plurality of elementary surfaces (Se1 to Se9) each having a photosensitive point (P1 to P9), each photosensitive point being connected between a line conductor (L1 to L3) and a column conductor (F1 to F3), the light source (7, 25) producing light radiation intended to illuminate a document (10, 10a) situated above the photosensitive surface (5), in order to allow the document to be read, characterised in that it furthermore includes, on the one hand, a light pen (15) emitting light radiation (16) and allowing at least one elementary surface (Se1 to Se9) to be illuminated, and in that it includes on the other hand, means (Da, Db, GL1 to GL3, GF1 to GF3, 45, 33) for distinguishing the line conductor (L1 to L3) and the column conductor (F1 to F3) between which is connected the photosensitive point (P1 to P9) situated in the elementary surface (Se1 to Se9) illuminated by the light pen (15), also allowing use of the said photosensitive device for writing.

2. Photosensitive device according to Claim 1, characterised in that each photosensitive point (P1 to P9) includes two elements (Da, Db) mounted in series, a first element (Da) consisting of a switching means and the second element (Db) being photosensitive.

3. Photosensitive device according to Claim 2, characterised in that the first element (Da) forming the switching means is a diode.

4. Photosensitive device according to Claim 3, characterised in that the diode (Da) forming the switching means is a photodiode.

5. Photosensitive device according to one of Claims 2 to 4, characterised in that the second element (Db) consists of a photosensitive diode.

6. Photosensitive device according to one of Claims 2 to 4, characterised in that the second element (Db) is a photoresistor.

7. Photosensitive device according to Claim 3, characterised in that it includes means (45, IV1 to IV3) for forward biasing the diode (Da) forming the switching element.

8. Photosensitive device according to one of Claims 1, 2 or 3, characterised in that each photosensitive point (P1 to P9) includes two diodes (Da, Db) mounted in series with opposed conduction directions, at least one of the two diodes being photosensitive.

9. Photosensitive device according to Claim 8, characterised in that it includes means (45, IV1 to IV3) for biasing the two diodes (Da, Db) of each photosensitive point (P1 to P9) so that a first diode (Da) is forward biased and the second diode (Db) is reverse biased, at least the second diode (Db) being photosensitive.

10. Photosensitive device according to one of the preceding claims, characterised in that the photosensitive points (P1 to P9) have an active surface (Sa1 to sag) much smaller in area than an elementary surface (Se1 to Se9).

11. Photosensitive device according to Claim 10, characterised in that the active surfaces (Sa1 to Sa9) are equal to or smaller in area than substantially 90 % of an elementary surface (Se1 to Se9).

12. Photosensitive device according to one of the preceding claims, characterised in that the light source (7) is situated under the photosensitive matrix (2), on the opposite side from the document (10).

13. Photosensitive device according to Claim 12, characterised in that a screen (12) which is opaque to light is interposed between the light source (7) and the photosensitive points (P1 to P9).

14. Photosensitive device according to one of the preceding claims, characterised in that it furthermore includes a display device (7, 20) disposed under the photosensitive matrix (2), so as to project an image which is visible through the photosensitive matrix (2).

15. Photosensitive device according to Claim 14, characterised in that the display device (20) is of the liquid crystal type.

16. Photosensitive device according to Claim 15, characterised in that the liquid crystal display device (20) is disposed between the photosensitive matrix (2) and the light source (7).

17. Photosensitive device according to Claim 14, characterised in that the display device (7) furthermore constitutes a light source.

18. Photosensitive device according to one of Claims 1 to 11, characterised in that the light source (25) is situated above the photosensitive surface (5).

19. Photosensitive device according to one of Claims 8 to 18, characterised in that the photosensitive matrix (2) includes a substrate (3) on which the column conductors (F1 to F3) are produced, and in that the two diodes (Da, Db) of a photosensitive point (P1 to P9) are formed from a stack (60) of five superimposed semiconducting layers (62, 63, 64, 65, 66), the third layer (64) or middle layer being common to two diodes (Da, Db).

20. Photosensitive device according to one of the preceding claims, characterised in that the photosensitive matrix (2) includes a substrate (3) carrying a stack (60) of semiconducting layers disposed between conductors in a column (F1 to F3) and conductors in a line (L1 to L3), the stack (60) of semiconducting layers being etched so as to constitute bands (60a) each situated under each line conductor (L1 to L3) and obtained by simultaneous etching of the conductors in a line (L1 to L3) and of the stack (60) of semiconducting layers.

21. Photosensitive device according to Claim 20, characterised in that the active surface (Sa1) of a photosensitive point (P1 to P9) is equal to or smaller in area than substantially 50 % of an elementary surface (Se1 to Se9).

22. Photosensitive device according to Claim 15, characterised in that the photosensitive matrix (2) includes a transparent substrate (3) which furthermore constitutes a partition (21) of the display device (20).

23. Photosensitive device according to one of the preceding claims, characterised in that the photosensitive matrix (2) includes a substrate (3) carrying a stack (60) of semiconducting layers disposed between conductors in a column (F1 to F3) and conductors in a line (L1 to L3), and in that an insulating and transparent layer (71) is deposited on the opposite side from the substrate in order to form a mechanical protection screen (9).
